# EUROPÄISCHE PATENTSCHRIFT

(11) **EP 3 794 718 B1**
(45) Veröffentlichungstag und Bekanntmachung des Hinweises auf die Patenterteilung: **13.03.2024**
(21) Anmeldenummer: 19745100.8
(22) Anmeldetag: 23.07.2019
(51) Int. Cl.: H02K 11/25, H02H 5/04, H02H 7/085

(54) **EC-MOTOR MIT EINER WELLE, EINER KOMMUTIERUNGSELEKTRONIK UND EINER VORRICHTUNG ZUM DETEKTIEREN EINES TEMPERATURANSTIEGS**
ELECTRONICALLY COMMUTATED MOTOR WITH A SHAFT, COMMUTATION ELECTRONICS AND MEANS FOR DETECTING A TEMPERATURE RISE
MOTEUR À COMMUTATION ÉLECTRONIQUE AVEC UN ARBRE, DES COMPOSANTS ÉLECTRONIQUES À COMMUTATION ET UN DISPOSITF POUR DÉTECTER UNE MONTÉE DE TEMPÉRATURE

(30) Priorität: 25.10.2018 DE 102018126712
(43) Veröffentlichungstag der Anmeldung: 24.03.2021
(73) Patentinhaber: ebm-papst Mulfingen GmbH & Co. KG, 74673 Mulfingen (DE)
(72) Erfinder: WYSTUP, Ralph, 74653 Künzelsau (DE); HUMM, Markus, 74679 Weißbach (DE); ROSENBERGER, Daniel, 74653 Künzelsau (DE)
(74) Vertreter: Staeger & Sperling Partnerschaftsgesellschaft mbB
(86) Internationale Anmeldenummer: PCT/EP2019/069817
(87) Internationale Veröffentlichungsnummer: WO 2020/083541

(56) Entgegenhaltungen:
- EP-A1- 2 533 405

## Beschreibung

Die Erfindung betrifft einen EC-Motor mit einer Welle, einer Kommutierungselektronik und einer Vorrichtung zum Detektieren eines Temperaturanstiegs bei dem EC-Motor zum Schutz des EC-Motors selbst vor einer thermischen Überlastung.

Aus dem Stand der Technik ist bekannt, dass zum Schutz vor thermischer Motorüberlastung neben einem Überlastrelais, das anhand der Motorstromaufnahme eine Überlastung des Motors erkennt, z. B. auch Thermistorschutzschaltungen verwendet werden, die die Temperatur einer Motorwicklung detektieren und auswerten. Zur Erfassung der Temperatur der Motorwicklung kommen dabei verschiedene Temperaturdetektorelemente bzw. Sensoren, wie z. B. Temperaturfühler, insbesondere PTC-Thermistoren (PTC: positive temperature coefficient), PTIOO-Fühler und KTY-Fühler (mit PTC-Charakteristik), deren elektrischer Widerstand sich abhängig von der detektierten Temperatur ändert zur Anwendung. Die Funktionsweise des Übertemperaturschutzes aus den im Stand der Technik bekannten Lösungen mit einem PTC-Fühler basiert auf dem Prinzip, dass zwei temperaturabhängige Widerstandsbereiche verwendet werden. Es liegt der Widerstand eines solchen Temperaturdetektorelementes in einem ersten Widerstandsbereich, so lange sich die Motorwicklung in einem Temperaturbereich befindet, der unproblematisch ist. Der zweite Widerstandsbereich, dessen Widerstandswerte beispielsweise größer sind als die des ersten Widerstandsbereichs, entspricht dann einer Temperatur über einem systemspezifischen Schwellenwert.

Bei den genannten Temperaturdetektorelementen, den Temperaturfühlern, wird die Überlast des Motors durch die Widerstandsänderung der Temperaturdetektorelemente innerhalb vordefinierter Wertebereiche ausgewertet. Dagegen trennt ein sogenanntes Thermo-Click-Element in seinem üblichen Anwendungsgebiet bei Erreichen des Temperaturschwellwerts den Stromkreis durch eine Motorwicklung.

Temperaturfühler werden dagegen mittels einer Schutzschaltung ausgewertet, die im Wesentlichen den elektrischen Widerstand der betreffenden Temperaturdetektorelemente bestimmt, und ein Meldungssignal an einen Schalter, an eine Auswerteschaltung oder dergleichen ausgibt, wodurch z. B. ein Abschalten des Gerätes ausgelöst bzw. eine sonstige vorbestimmte Funktion gestartet wird, wenn abhängig von der gemessenen Temperatur eine thermische Überlast erkannt wird. Bei größeren Wicklungsströmen schaltet dabei das Sensorelement oder der Temperaturwächter nicht direkt den Wicklungsstrom, sondern wirkt auf die Stromversorgung oder die Ansteuerung der Leistungsendstufe.

Aus der EP 2535993 A1 ist eine Ansteuerschaltung für einen kollektorlosen, elektronisch kommutierten Gleichstrom-Motor, d. h. für einen so genannten EC-Motor mit einer an einer Versorgungsgleichspannung liegenden Halbleiter-Endstufe bekannt, die von einer elektronischen Kommutierungssteuerung über eine Treiberstufe zum zeitlich versetzten Ansteuern von Statorwicklungen des Motors zwecks Erzeugung eines magnetischen Drehfeldes für einen Rotor in Abhängigkeit von der Rotor-Drehstellung angesteuert wird.

Die EP 2 533 405 A1 offenbart einen EC-Motor mit einer Welle, einer Kommutierungselektronik und einer Vorrichtung zum Detektieren eines Temperaturanstiegs.

Solche EC-Motoren müssen entsprechend gültiger nationaler und internationaler Normbestimmungen vor Überhitzungen im Falle von abnormalen Betriebssituationen geschützt werden.

Die in der Praxis bisher eingesetzten Verfahren haben nahezu alle einen systemspezifischen Nachteil aufgrund der spezifischen Lösung, die man verwendet. Einerseits gibt es Platzprobleme, um die Sensoren unter zu bringen. Andererseits bedarf es zusätzlicher kostenintensiver Baugruppen und Montagen, um die jeweilige Temperaturüberwachung in dem Motor zu implementieren.

Ferner gibt es Probleme, die es in der Praxis aufgrund eines schnellen Temperaturanstieges zu berücksichtigen gibt. So kann es z. B. im Falle einer Rotorblockierung des Motors abhängig von der Wicklungsauslegung zu schnellen Wicklungstemperaturanstiegen kommen. In der Folge treten unzulässig hohe Wicklungstemperaturen auf, die aber auf Grund der trägen Temperatursensoren nicht rechtzeitig die Abschaltung der Bestromung des Motors bewirkt, da das Ansprechverhalten dafür zu langsam ist.

Der vorliegenden Erfindung liegt demnach die Aufgabe zu Grunde, eine Vorrichtung zu schaffen, die eine erhöhte Betriebssicherheit zur Vermeidung von Motor-Überhitzungen gewährleistet und zuverlässig einen Temperaturanstieg insbesondere oberhalb einer zulässigen Grenztemperatur erfasst und den Motor vor einer Überhitzung schützt.

Diese Aufgabe wird durch die Merkmalskombination gemäß Anspruch 1 und Anspruch 8 gelöst.

In einer vorteilhaften Ausgestaltung der Erfindung ist vorgesehen, dass das Ringelement positionsfest das drehende Element außen umgreifend angeordnet ist.

Weiter vorteilhaft ist es, wenn das drehende Element ein auf der Welle fixiertes Zahnrad ist.

In einer weiteren vorteilhaften Ausgestaltung der Erfindung ist vorgesehen, dass das Ringelement aus einem Material ausgebildet ist, welches gegenüber dem Material des drehenden Elements einen größeren, vorzugsweise mindestens doppelt so großen Wärmeausdehnungskoeffizient besitzt. Hierzu kommen Materialien in Frage, die sich bei einer Temperaturerhöhung stark ausdehnen, jedoch temperaturbeständig im Hinblick auf Temperaturwechsel sind. Wird eine kritische, innere Spannung überschritten, so kommt es zur Schädigung des Materials. Je nach Werkstoff kann das durch unterschiedliche Mechanismen zu unterschiedlichen Schadensfällen führen: Bei Metallen kommt es zu Gefügeveränderungen (z. B.: Zerfall von Perlitgefügen oder Bildung von Martensiten in Edelstählen), bis hin zur Bildung von Heißrissen, die das Werkstück zerstören können. Bei Keramiken treten aufgrund der hohen Sprödbruchneigung meist Risse im Inneren auf, die rasch zum Versagen führen können. Kunststoffe zeigen beide Mechanismen, jedoch bei deutlich geringeren Temperaturdifferenzen. Der Fachmann hat hier auf den jeweiligen Anwendungsfall bezogen daher eine entsprechende Werkstoffauswahl zu treffen, wobei ggf. auch geschickt gewählte Verbundmaterialien und Verbundwerkstoffe zum Einsatz kommen können. Denkbar wäre auch ein Verbundmaterial aus einem Metallring mit einem innen angeordneten und austauschbaren Kunststoffeinsatz zu verwenden, der ggf. nach einer gewissen Zeit bzw. für einen anderen Anwendungsfall ausgetauscht werden kann.

Weiter vorteilhaft ist es, wenn das drehende Element aus einem Material ausgebildet ist, welches gegenüber dem Material des Ringelements einen größeren, vorzugsweise mindestens doppelt so großen Wärmeausdehnungskoeffizient besitzt.

In einer ebenfalls vorteilhaften Ausgestaltung der Erfindung ist vorgesehen, dass das Ringelement ein Wandabschnitt eines um die Welle angeordneten Gehäusebereichs eines Gehäuses ist. Hierdurch kann ein zusätzliches Element entfallen. Denkbar ist auch, dass es sich nur um ein peripher über einen bestimmten Winkelbereich erstreckender Abschnitt ist, der sich ausdehnt und mit dem drehenden Element 30 zusammenwirkt.

Vorteilhaft ist es, wenn eine Auswertevorrichtung und ein Datenspeicher für das Hinterlegen von Daten vorgesehen sind, bei der zu bestimmten Rastmomenten aufgrund einer bestimmten mechanischen Reibung zwischen den beiden aufgrund einer jeweils ganz bestimmten Temperaturerhöhung und Ausdehnung eine entsprechende Temperatur zugewiesen ist. Somit kann sich aus der EMK bzw. dem zugrunde liegenden Rastmoment auf die Temperatur schließen lassen.

Ein weiterer Aspekt der vorliegenden Erfindung betrifft ein Verfahren gemäß Anspruch 8.

Besonders vorteilhaft ist es, wenn zusätzlich eine Abschaltvorrichtung vorgesehen ist und bei einer Detektion einer bestimmten, insbesondere unzulässigen Temperatur, der Motor unmittelbar abgeschaltet wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Ansicht eines ersten Ausführungsbeispiels der Erfindung und
- Fig. 2: eine schematische Ansicht eines alternativen Ausführungsbeispiels der Erfindung.

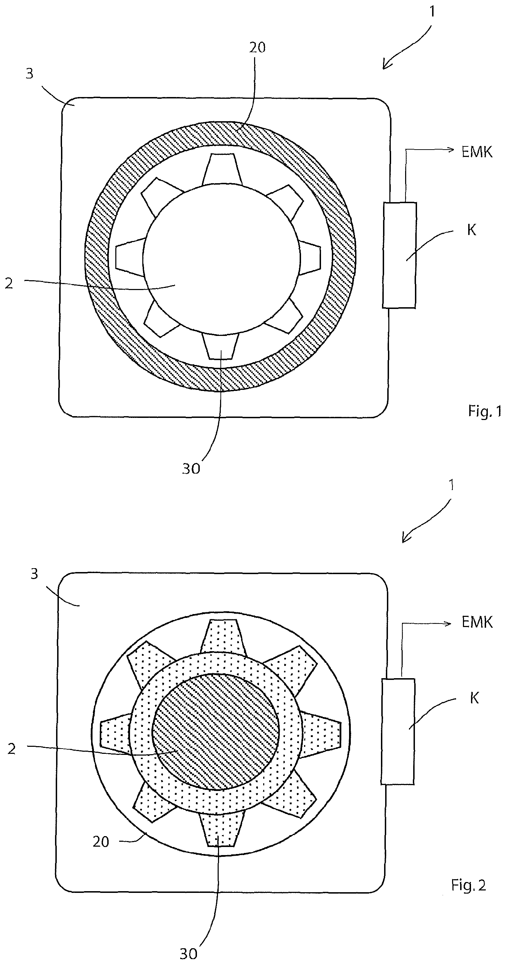

Die Erfindung wird im Folgenden mit Bezug auf die Figuren 1 und 2 näher erläutert, wobei gleiche Bezugszeichen in den Figuren auf gleiche strukturelle und/oder funktionale Merkmale hinweisen.

Dabei zeigt die Fig. 1 lediglich beispielhaft schematisch ein erstes Ausführungsbeispiel der Erfindung.

Die Vorrichtung 1 ist wie dargestellt integriert auf der Welle 2 des mit der Kommutierungselektronik K ausgestatteten EC-Motors 3 ausgebildet zum Initiieren einer von der Kommutierungselektronik K detektierbaren Veränderung der elektromotorischen Kraft EMK des EC-Motors 3 bei Erreichen einer definierten Temperatur T_{G}. Ferner ist ein mit der Welle 2 drehenden Element 30 vorgesehen und zwar eine Zahnanordnung auf der Welle 2.

Das Element 30 ist so gegenüber dem Ringelement 20 angeordnet, dass bei einer bestimmten Temperaturerhöhung das Ringelement 20 eine solche Volumenänderung erfährt und dann aufgrund mechanischer Reibung mit dem Element 30 auf der Welle 2 bestimmungsgemäß ein mechanisches Rastmoment erzeugt.

Dieses Rastmoment ist von der Kommutierungselektronik K des EC-Motors detektierbar. Die somit detektierbare Veränderung der EMK des EC-Motors lässt auf eine bestimmte Temperaturerhöhung schließen. Solange ein Spalt zwischen den beiden Elementen 20, 30 besteht, ist davon auszugehen, dass eine unzulässige Temperaturerhöhung nicht vorliegt.

Grundsätzlich ist das Ringelement 20 gegenüber der drehenden Welle 2 im Betrieb der Vorrichtung positionsfest und das drehende Element 30 umgreifend angeordnet. Sofern von einer annähernd isotropen Ausdehung bei einer Temperaturerhöhung ausgegangen wird, greift dann die Innenfläche des Ringelements 20 gegen die Zähne der Zahnradwelle.

Die Figur 2 zeigt eine Ausführungsform, bei der die Verhältnisse quasi umgedreht sind und das Ringelement 20 ein Wandabschnitt eines um die Welle 2 angeordneten Gehäusebereichs eines Gehäuses.

Es kommen als weitere Ausführungsformen auch eine Riffelung oder eine Zahnung am Aussenring in Betracht. Solche verursachen bei einer zunehmenden Belastung ein hörbares "ratschenartiges" Signal.

## Patentansprüche

1. EC-Motor (3) mit einer Welle (2), einer Kommutierungselektronik (K) und einer Vorrichtung (1) zum Detektieren eines Temperaturanstiegs, welche auf der Welle (2) des mit der Kommutierungselektronik (K) ausgestatteten EC-Motors (3) integriert ist und ausgebildet ist, bei Erreichen einer definierten Temperatur T_{G} eine von der Kommutierungselektronik (K) des EC-Motors (3) detektierbare Veränderung einer elektromotorischen Kraft (EMK) des EC-Motors (3) zu initiieren,
wobei die Vorrichtung aus einer wenigstens zweiteiligen Rastmomenteinheit ausgebildet ist, welche aus wenigstens einem Ringelement (20), welches um die Welle (2) des Motors (3) herum angebracht ist, und aus einem mit der Welle (2) drehenden Element (30) besteht,
wobei das wenigstens eine Ringelement (20) und das mit der Welle (2) drehende Element (30) so zueinander angeordnet sind, dass bei einem bestimmten Temperaturanstieg wenigstens eines der beiden Elemente (20, 30) eine Volumenänderung erfährt und aufgrund mechanischer Reibung mit dem jeweils anderen Element (20, 30) bestimmungsgemäß ein mechanisches Rastmoment erzeugt, das zu einer detektierbaren Veränderung der elektromotorischen Kraft (EMK) des EC-Motors führt, aufgrund dessen ein bestimmter Temperaturanstieg erfasst wird.

2. EC-Motor (3) nach Anspruch 1, **dadurch gekennzeichnet, dass** das wenigstens eine Ringelement (20) positionsfest und das drehende Element (30) radial außen umgreifend angeordnet ist.

3. EC-Motor (3) nach Anspruch 1 oder 2, **dadurch gekennzeichnet, dass** das drehende Element (30) ein auf der Welle (2) fixiertes Zahnrad ist.

4. EC-Motor (3) nach einem der vorhergehenden Ansprüche 1, 2 oder 3,
**dadurch gekennzeichnet, dass** das Ringelement (20) aus einem Material ausgebildet ist, welches gegenüber dem Material des drehenden Elements (30) einen größeren, vorzugsweise mindestens doppelt so großen Wärmeausdehnungskoeffizient besitzt.

5. EC-Motor (3) nach einem der vorhergehenden Ansprüche 1, 2 oder 3,
**dadurch gekennzeichnet, dass** das drehende Element (30) aus einem Material ausgebildet ist, welches gegenüber dem Material des Ringelements (20) einen größeren, vorzugsweise mindestens doppelt so großen Wärmeausdehnungskoeffizient besitzt.

6. EC-Motor (3) nach einem der vorhergehenden Ansprüche 1 bis 3 oder 5,
**dadurch gekennzeichnet, dass** das Ringelement (20) ein Wandabschnitt eines um die Welle (2) angeordneten Gehäuse-bereichs eines Gehäuses ist.

7. EC-Motor (3) nach einem der vorhergehenden Ansprüche, wobei ferner eine Auswertevorrichtung und ein Datenspeicher für das Hinterlegen von Daten vorgesehen sind,
bei der zu bestimmten hinterlegten Rastmomenten aufgrund der mechanischen Reibung zwischen dem wenigstens einen Ringelement (20) und dem mit der Welle (2) drehenden Element (30) aufgrund eines jeweils ganz bestimmten Temperaturanstiegs und einer jeweils ganz bestimmten Ausdehnung eine entsprechende Temperatur zugewiesen ist.

8. Verfahren zum Detektieren eines bestimmten Temperaturanstiegs bei einem EC-Motor (3) gemäß einem der vorhergehenden Ansprüche mit den folgenden Schritten:
a. Erfassen der Veränderung der EMK,
b. Auswerten der erfassten Daten und
c. Bestimmen eines zu der Änderung der EMK gehörenden bestimmten Rastmoments und einer diesem Rastmoment zugewiesenen Temperatu r.

9. Verfahren nach Anspruch 8, wobei eine Abschaltvorrichtung vorgesehen ist und der Motor bei einer Detektion einer bestimmten insbesondere unzulässigen Temperatur durch die Abschaltvorrichtung abgeschaltet wird.

## Claims

1. An electronically commutated motor (3) with a shaft (2), a commutation electronics (K) and a device (1) for detecting a temperature rise, which is integrated on the shaft (2) of the electronically commutated motor (3) equipped with the commutation electronics (K) and formed to initiate a change of an electromotive force (EMK) of the electronically commutated motor (3) which can be detected by the commutation electronics (K) of the electronically commutated motor (3) when reaching a defined temperature T_{G},
wherein the device is formed from an at least two-part cogging torque unit which consists of at least one ring element (20) which is attached around the shaft (2) of the motor (3) and an element (30) rotating with the shaft (2),
wherein the at least one ring element (20) and the element (30) rotating with the shaft (2) are arranged with regard to one another so that in case of a certain temperature rise at least one of the two elements (20, 30) experiences a volume change and creates a mechanical cogging torque due to mechanical friction with the respective other element (20, 30) as intended which leads to a detectable change of the electromotive force (EMK) of the electronically commutated motor due to which a certain temperature rise is sensed.

2. The electronically commutated motor (3) according to claim 1, **characterized in that** the at least one ring element (20) is fixed in position and the rotating element (30) is arranged enclosing radially outside.

3. The electronically commutated motor (3) according to claim 1 or 2, **characterized in that** the rotating element (30) is a gear fixed on the shaft (2).

4. The electronically commutated motor (3) according to any one of claims 1, 2 or 3, **characterized in that** the ring element (20) is formed from a metal which has a larger, preferably at least twice as large thermal expansion coefficient compared to the material of the rotating element (30).

5. The electronically commutated motor (3) according to any one of the preceding claims 1, 2 or 3, **characterized in that** the rotating element (30) is formed from a material which possesses a larger, preferably at least twice as large thermal expansion coefficient compared to the material of the ring element (20).

6. The electronically commutated motor (3) according to any one of the preceding claims 1 to 3 or 5, **characterized in that** the ring element (20) is a wall section of a housing region of a housing arranged around the shaft (2).

7. The electronically commutated motor (3) according to any one of the preceding claims, wherein an evaluation device and a data storage for depositing data are further provided,
wherein a corresponding temperature is assigned to certain deposited cogging torques due to the mechanical friction between the at least one ring element (20) and the element (30) rotating with the shaft (2) due to a respective specific temperature rise and a respective specific expansion.

8. A method for detecting a certain temperature rise in an electronically commutated motor (3) according to any one of the preceding claims with the following steps:
a. sensing the change of the EMK,
b. evaluating the sensed data, and
c. determining a certain cogging torque belonging to the change of the EMK and a temperature assigned to this cogging torque.

9. The method according to claim 8, wherein a switch-off device is provided and the motor is switched off by the switch-off device when a certain in particular unacceptable temperature is detected.

## Revendications

1. Moteur à commutation électronique (EC) (3), comprenant un arbre (2), une électronique de commutation (K) et un dispositif (1) permettant de détecter une montée de température, qui est intégré sur l'arbre (2) du moteur EC (3) équipé de l'électronique de commutation (K) et est réalisé pour initier un changement, détectable par l'électronique de commutation (K) du moteur EC (3), d'une force électromotrice (EMK) du moteur EC (3) lorsqu'une température définie T_{G} est atteinte,
dans lequel le dispositif est réalisé à partir d'une unité à couple de détente en au moins deux parties, qui est composée d'au moins un élément annulaire (20) qui est monté autour de l'arbre (2) du moteur (3), et d'un élément (30) tournant avec l'arbre (2),
dans lequel ledit au moins un élément annulaire (20) et l'élément (30) tournant avec l'arbre sont disposés l'un par rapport à l'autre de telle sorte que lors d'une montée de température déterminée, au moins l'un des deux éléments (20, 30) subit un changement de volume et génère en raison d'un frottement mécanique avec l'autre élément respectif (20, 30) normalement un couple de détente mécanique qui entraîne un changement détectable de la force électromotrice (EMK) du moteur EC en raison duquel une montée de température déterminée est détectée.

2. Moteur EC (3) selon la revendication 1, **caractérisé en ce que** ledit au moins un élément annulaire (20) est à position fixe, et l'élément tournant (30) est disposé de manière à entourer radialement à l'extérieur.

3. Moteur EC (3) selon la revendication 1 ou 2, **caractérisé en ce que** l'élément tournant (30) est une roue dentée fixée sur l'arbre (2).

4. Moteur EC (3) selon l'une quelconque des revendications précédentes 1, 2 ou 3, **caractérisé en ce que** l'élément annulaire (20) est réalisé à partir d'un matériau qui dispose d'un coefficient de dilatation thermique supérieur, de préférence au moins deux fois plus grand, que le matériau de l'élément tournant (30).

5. Moteur EC (3) selon l'une quelconque des revendications précédentes 1, 2 ou 3, **caractérisé en ce que** l'élément tournant (30) est réalisé à partir d'un matériau qui dispose d'un coefficient de dilatation thermique supérieur, de préférence au moins deux fois plus grand, que le matériau de l'élément annulaire (20).

6. Moteur EC (3) selon l'une quelconque des revendications précédentes 1 à 3 ou 5, **caractérisé en ce que** l'élément annulaire (20) est une section de paroi d'une zone de carter d'un carter, disposée autour de l'arbre (2).

7. Moteur EC (3) selon l'une quelconque des revendications précédentes, dans lequel en outre un dispositif d'évaluation et une mémoire de données pour la mémorisation de données sont prévus,
dans lequel pour des couples de détente mémorisés déterminés, en raison du frottement mécanique entre ledit au moins un élément annulaire (20) et l'élément (30) tournant avec l'arbre (2), en raison d'une montée de température précise respectivement et d'une dilatation précise respectivement, une température correspondante est attribuée.

8. Procédé permettant de détecter une montée de température déterminée sur un moteur EC (3) selon l'une quelconque des revendications précédentes, comprenant les étapes suivantes consistant à :
a) détecter le changement de la force électromotrice,
b) évaluer les données détectées, et
c) déterminer un couple de détente déterminé associé au changement de la force électromotrice et une température attribuée à ce couple de détente.

9. Procédé selon la revendication 8, dans lequel un dispositif de coupure est prévu, et le moteur est coupé par le dispositif de coupure lorsqu'une température déterminée, en particulier inadmissible, est détectée.
